# EUROPEAN PATENT SPECIFICATION

(11) **EP 3 793 342 B1**
(45) Date of publication and mention of the grant of the patent: **01.05.2024**
(21) Application number: 19731340.6
(22) Date of filing: 16.05.2019
(51) Int. Cl.: A01C 5/06, A01C 7/08, A01C 7/20, A01G 13/02, A01C 7/04, A01C 7/10

(54) **SEEDING METHOD BY MEANS OF A SEED SOWING MACHINE CONNECTED TO A TRACTOR AND SEED SOWING MACHINE**
SÄVERFAHREN MIT EINER TRAKTORGEBUNDENEN SÄMASCHINE UND SÄMASCHINE
SEMOIR ET PROCÉDÉ DE SEMIS AVEC UN SEMOIR CONNECTÉ À UN TRACTEUR

(30) Priority: 16.05.2018 IT 201800005430
(43) Date of publication of application: 24.03.2021
(73) Proprietor: Rubiolo, Aldo, 12038 Savigliano (CN) (IT)
(72) Inventor: CARENA, Alberto, 12040 Cervere (CN) (IT); RUBIOLO, Aldo, 12038 Savigliano (CN) (IT)
(74) Representative: Aprà, Mario
(86) International application number: PCT/IB2019/054077
(87) International publication number: WO 2019/220396

(56) References cited:
- EP-A1- 2 805 596
- WO-A1-2017/182997
- JP-A- H05 111 304
- US-A- 3 315 623
- US-A- 4 117 787

## Description

The present invention relates to a seeding method by means of a seed sowing machine connected to a tractor. The invention also relates to the seed sowing machine with which said process is implemented.

WO 2017/182997 A1 and EP 2 805 596 A1 disclose the subject matter of the preambles of claims 1 and 6 with a seed planter with pneumatic singulation and ejection of seeds into a furrow.

US 3 315 623 A and JP H05 111304 A disclose sowing machines configured for laying out mulch sheet and seeding through holes in the mulch sheet.

In the international copending application No. PCT/IB2019/053994 of the same owner, a method of the type specified and the seed sowing machine for implementing the same method are described.

According to the aforementioned international application, the sowing process is carried out by means of a seed sowing machine connected to a tractor and comprising:
- at least one hopper for containing a mass of seeds and distribution and separating means of the seeds contained in said at least one hopper for sowing in at least one furrow in a portion of ground to be sown below said seed sowing machine;
- furrower means that, during advance of the tractor on said portion of ground to be sown, form said at least one furrow, in which the seeds distributed and separated by means of said seed distribution and separating means are deposited.

The aforesaid known method comprises the steps consisting of:
- providing in said seed sowing machine seed conveying means, to which the seeds distributed and separated by means of said seed distribution and separating means are delivered;
- providing in said seed sowing machine pneumatic means that produce and direct a compressed air flow along said seed conveying means;
- separately transporting each seed, coming from said seed distribution and separating means, by means of said compressed air flow, along said seed conveying means;
- providing in said seed sowing machine pneumatic ejection means of the seeds to be deposited, which are connected in an air-tight manner downstream with respect to said seed conveying means, according to the direction of said compressed air flow, and have an end part configured as seed ejection mouth;
- arranging said seed ejection mouth of said pneumatic ejection means above said at least one furrow;
- propelling and ejecting by means of said compressed air flow each seed, distributed and separated from said mass of seeds, through said ejection mouth of said pneumatic ejection means, towards said at least one furrow, for sowing a plurality of seeds sequentially in said at least one furrow;
- providing in said seed sowing machine means for supporting, unwinding and depositing a mulching sheet so that, during advance of said tractor, at least one mulching sheet is unwound from at least one reel of mulching sheet, which is held on the ground by means of at least one free end area, arranged upstream of an initial end of said at least one furrow, according to the direction of advance of the tractor;
- arranging a portion of said mulching sheet, which is unwound from said at least one reel, below and close to said seed ejection mouth of said pneumatic ejection means and above said at least one furrow, on which the mulching sheet is superimposed;
- forming in said portion of said mulching sheet, which is deposited on the ground during advance of said tractor, a series of holes corresponding to said at least one furrow and which are produced by means of perforation of the sheet by seeds propelled in sequence through said ejection mouth of said pneumatic ejection means and which are deposited sequentially in said at least one furrow.

On the other hand, the seed sowing machine object of the aforementioned international application No. PCT/IB2019/053994 comprises:
- at least one hopper for containing a mass of seeds and distribution and separating means of the seeds contained in said at least one hopper for sowing in at least one furrow in a portion of ground to be sown below said seed sowing machine;
- furrower means that, during advance of the tractor on said portion of ground to be sown, form said at least one furrow, in which the seeds distributed and separated by means of said seed distribution and separating means are deposited;
- seed conveying means, to which the seeds distributed and separated by means of said seed distribution and separating means are delivered;
- pneumatic means that produce and direct a compressed air flow along said seed conveying means, said compressed air flow separately transporting each seed, coming from said seed distribution and separating means, along said seed conveying means;
- pneumatic ejection means of the seeds to be deposited, which are connected in an air-tight manner downstream with respect to said seed conveying means, according to the direction of said compressed air flow, and have an end part configured as seed ejection mouth arranged over said at least one furrow;
- wherein each seed, distributed and separated from said mass of seeds, is propelled and ejected by means of said compressed air flow through said ejection mouth of said pneumatic ejection means towards said at least one furrow;
- means for supporting, unwinding and depositing a mulching sheet wound in at least one reel, wherein, during advance of said tractor, at least one mulching sheet is unwound from at least one reel, which is held on the ground by means of at least one free end area, arranged upstream of an initial end of said at least one furrow, according to the direction of advance of the tractor;
- wherein a portion of said mulching sheet, which is unwound from said at least one reel, is arranged below and close to said seed ejection mouth of said pneumatic ejection means and above said at least one furrow, on which the mulching sheet is superimposed, and
- wherein the portion of said mulching sheet, which is deposited on the ground during advance of said tractor, has a series of holes corresponding to said at least one furrow and produced by means of perforation of the sheet by seeds propelled in sequence through said ejection mouth of said pneumatic ejection means and which are deposited sequentially in said at least one furrow.

As is clear from the above, according to the object of the aforementioned international application No. PCT/IB2019/053994, the seeds ejected through the ejection mouth of the pneumatic seed ejection means, during the advancement of the tractor, perforate the mulching sheet which is deposited on the ground, falling and/or penetrating into the base below the sheet itself. In particular, each ejected seed produces a corresponding perforation in the mulching sheet, the shape and dimensions whereof are determined by the physical parameters relating to the ejection of the seed through said ejection mouth, for example the inclination of said pneumatic ejection means with respect to the ground, the air pressure that expels the seed through that mouth.

Although the aforementioned sowing process is satisfactory, however, it has a limitation in the impossibility of providing in the mulching sheet, for each type of seed that is ejected and sown through said ejection mouth, a corresponding opening, having shape and dimensions properly suitable for the development of the seedling generated from the seed thus sown. In fact, the opening made in the mulching sheet is substantially determined, as specified above, and may have a shape and dimensions that do not allow the seedling germinated from the respective seed to escape from the mulching sheet being developed. In particular, the seedling germinated from the seed can sometimes become trapped beneath the mulching sheet, with consequent deterioration of the seedling itself.

The present invention aims, in particular, to remedy the aforementioned drawback. Therefore, an object of the present invention is to provide a seeding method by means of a seed sowing machine connected to a tractor and relative seed sowing machine, as described in the international copending application No. PCT/IB2019/053994, which allow performing, during the advancement of the tractor, the operation of sequential perforation of a mulching sheet and the operation of depositing respective seeds in a furrow below the mulching sheet, through corresponding holes or openings made in the sheet, which are correctly formed and sized to allow the seedling to escape from each seed during the development step.

Another object of the present invention is to provide a seeding method by means of a seed sowing machine connected to a tractor and relative sowing machine, which are simple and safe to implement and, respectively, carry out.

In view of these objects, the present invention provides a seeding method by means of a seed sowing machine connected to a tractor comprising:
- at least one hopper for containing a mass of seeds and distribution and separating means of the seeds contained in said at least one hopper for sowing in at least one furrow in a portion of ground to be sown below said seed sowing machine, and
- furrower means that, during advance of the tractor on said portion of ground to be sown, form said at least one furrow, in which the seeds distributed and separated by means of said seed distribution and separating means are deposited,
wherein said method comprises the steps consisting of:
- providing in said seed sowing machine seed conveying means, to which the seeds distributed and separated by means of said seed distribution and separating means are delivered;
- providing in said seed sowing machine first pneumatic means that produce and direct a compressed air flow through said seed conveying means;
- separately transporting each seed, coming from said seed distribution and separating means, by means of said compressed air flow, through said seed conveying means;
- providing in said seed sowing machine pneumatic ejection means of the seeds to be deposited, which are connected in an air-tight manner downstream with respect to said seed conveying means, according to the direction of said compressed air flow, and have an end part configured as seed ejection mouth;
- arranging said seed ejection mouth of said pneumatic ejection means above said at least one furrow;
- propelling and ejecting by means of said compressed air flow each seed, distributed and separated from said mass of seeds, through said ejection mouth of said pneumatic ejection means, towards said at least one furrow, sowing a plurality of seeds sequentially in said at least one furrow;
- providing in said seed sowing machine means for supporting, unwinding and depositing a mulching sheet so that, during advance of said tractor, at least one mulching sheet is unwound from at least one reel of mulching sheet, which is held on the ground by means of at least one free end area, arranged upstream of an initial end of said at least one furrow, according to the direction of advance of the tractor;
- arranging a portion of said mulching sheet, which is unwound from said at least one reel, below and close to said seed ejection mouth of said pneumatic ejection means and above said at least one furrow, on which the mulching sheet is superimposed;
said method being characterized by the steps consisting of:
- providing in said seed sowing machine pneumatic means for perforating said portion of said mulching sheet, including a pneumatic nozzle configured for perforating the mulching sheet, and arranging said pneumatic perforation nozzle above said portion of said mulching sheet, upstream, in the direction of advancement of said tractor, and in the proximity of said seed ejection mouth of the seeds, and at said at least one furrow below said sheet;
- providing in said seed sowing machine second pneumatic means that produce and/or direct a compressed air flow through said pneumatic perforation means of said sheet;
- providing in said seed sowing machine electric/electronic control means for the selective ejection of said compressed air flow, through said pneumatic perforation nozzle, in synchronism with the ejection of each seed through said seed ejection mouth of said pneumatic ejection means;
- producing and directing a flow of compressed air through said pneumatic means for perforating said sheet up to said pneumatic perforation nozzle;
- controlling the selective emission of said compressed air flow, through said pneumatic perforation nozzle, in synchronism with the ejection of each seed through said seed ejection mouth of said pneumatic ejection means by means of said control means, so as to:
   - forming in said portion of said mulching sheet an opening, by means of a flow of compressed air emitted through said pneumatic nozzle for perforating said sheet, before a respective seed is ejected through said seed ejection mouth of said pneumatic ejection means;
   - intercepting said compressed air flow through said pneumatic perforation nozzle at least after the ejection of each seed through said seed ejection mouth of said pneumatic ejection means;
- sequentially repeating the forming operations of a respective opening in said portion of said mulching sheet, by means of a flow of compressed air emitted through said pneumatic perforation nozzle and of interception of said compressed air flow through said pneumatic perforation nozzle, for each seed ejected through said seed ejection mouth of said pneumatic ejection means,
so as to form in said portion of said mulching sheet, which is deposited on the ground during advance of said tractor, a series of openings corresponding to said at least one furrow, produced by means of perforation of the sheet by said pneumatic perforation means and through which the seeds are made to pass, respectively and sequentially, which are propelled through said ejection mouth of said pneumatic ejection means and which are deposited in said at least one furrow.

According to an embodiment of the present invention, the seeding method comprises the steps of:
- providing first electric/electronic presence sensor means, configured for detecting each seed in transit along a first section of said seed conveying means, respectively of said pneumatic seed ejection means, in a first instant of time of said transit, and emitting a corresponding first electrical output signal;
- providing second electric/electronic presence sensor means, configured for detecting each seed in transit along a second section of said seed conveying means, respectively of said pneumatic seed ejection means, at a second instant of time of said transit, following said first time instant, and emitting a corresponding second electrical output signal;
- providing solenoid valve means configured for selectively intercepting the emission of said compressed air flow through said pneumatic perforation nozzle;
- providing electronic processing and calculation means, which are connected in electric circuit with respect to said first electric/electronic presence sensor means, to said second electric/electronic presence sensor means and said solenoid valve means and are configured and programmed for selectively determining the pneumatic opening of said solenoid valve means, when said first sensor means emit said first electrical output signal, and the pneumatic closure of said solenoid valve means, when said second sensor means emit said second electrical output signal.

Said presence sensor means are configured, for example, as proximity sensor means. Other features and advantages of the invention are readily apparent from the following detailed description of an embodiment of the seed sowing machine according to the invention with reference to the drawing, which shows important details for the invention, as well as from the claims.

The features illustrated herein should not necessarily be understood to be in scale and they are represented so that the peculiarities according to the invention are clearly highlighted.

The different features can be obtained individually or in any combination with each other, as variants of the invention.

In the drawing:
- figure 1 is a side elevation view of the seed sowing machine according to an exemplary embodiment of the present invention, connected to a tractor (not shown) and including means for unwinding and depositing a mulching sheet on the ground, during the advancement of said tractor, from at least one reel of mulching sheet;
- figure 2 is a partial schematic side elevation view with parts omitted of means for containing, separating, distributing and pneumatically ejecting seeds, of pneumatic means for perforating a portion of said mulching sheet, including a pneumatic nozzle configured for perforating the mulching sheet, and of the furrowing means of the seed sowing machine of figure 1, in a different scale;
- figure 3 is a partial schematic view of a detail of figure 2, on a larger scale;
- figure 4 is a sectional view according to line IV-IV in figure 3;
- figure 5 is a view of detail V of figure 3, on a larger scale and in axial section;
- figure 6 is a view similar to that of figure 3, partial schematic and in different scale, with parts omitted, but showing a seed in transit along a first section of pneumatic seed ejection means, in a first instant of time of said transit, in which for illustrative clarity the seed is illustrated as a thick point at said first section of the pneumatic ejection means (even if the seed itself would not be visible);
- figure 6A is a view similar to that of figure 4, partial schematic and in different scale, with parts omitted, but showing an initial opening made in a mulching sheet portion (illustrated with dotted lines) by means of said pneumatic perforation means, in said first instant of time of transit of said seed along said first section of said pneumatic seed ejection means;
- figure 7 is a view similar to that of figure 6, but showing a seed in transit along a second section of said pneumatic seed ejection means downstream of said first section (according to the direction of flow of pressurized air), in a second instant of time of said transit;
- figure 7A is a view similar to that of figure 6A, but showing an end opening made in said mulching sheet portion (starting from said initial opening) by means of said pneumatic perforation means in the time interval between said first instant of time and said second instant of time during the transit of said seed along said pneumatic seed ejection means;
- figure 8 is a view similar to that of figure 7, but showing a seed at the end of the transit along said seed conveying means, in the pneumatic ejection step through the corresponding ejection mouth towards said end opening made in said mulching sheet;
- figure 8A is a view similar to that of figure 7A, but showing the seed pneumatically ejected through said ejection mouth in said end opening made in said mulching sheet portion.

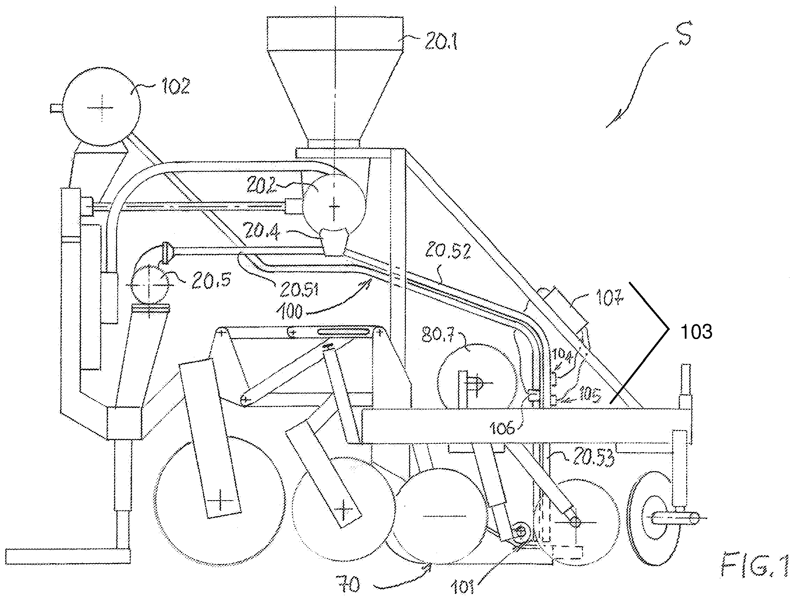

With reference to the drawing, the seed sowing machine according to present embodiment of the invention is indicated as a whole with the reference S (fig. 1).

The general structure of said seed sowing machine S is described in the international copending patent application No. PCT/IB2019/053994. Therefore, the construction details of the seed sowing machine S not relevant for the explanation of the present invention are omitted herein.

As described in the aforementioned international application No. PCT/IB2019/053994, said seed sowing machine S comprises:
- at least one hopper 20.1 for containing a mass of seeds and distribution and separating means 20.2 of the seeds contained in said at least one hopper for sowing in at least one furrow in a portion of ground to be sown below said seed sowing machine S;
- furrower means 70 that, during advance of the tractor on said portion of ground to be sown, form said at least one furrow, in which the seeds distributed and separated by means of said seed distribution and separating means 20.2 are deposited;
- seed conveying means 20.4, 20.52, to which the seeds distributed and separated by means of said seed distribution and separating means 20.2 are delivered;
- first pneumatic means 20.5, 20.51 generating air under pressure that produce and/or direct a compressed air flow along said seed conveying means 20.4, 20.52, said compressed air flow separately transporting each seed, coming from said seed distribution and separating means 20.2, through said seed conveying means 20.4, 20.52;
- pneumatic ejection means 20.53 of the seeds to be deposited, which are connected in an air-tight manner downstream with respect to said seed conveying means 20.4, 20.52, according to the direction of said compressed air flow, and have an end part configured as seed ejection mouth arranged over said at least one furrow;
so that each seed, distributed and separated from said mass of seeds, is propelled and ejected by means of said compressed air flow through said ejection mouth of said pneumatic ejection means 20.53 towards said at least one furrow.

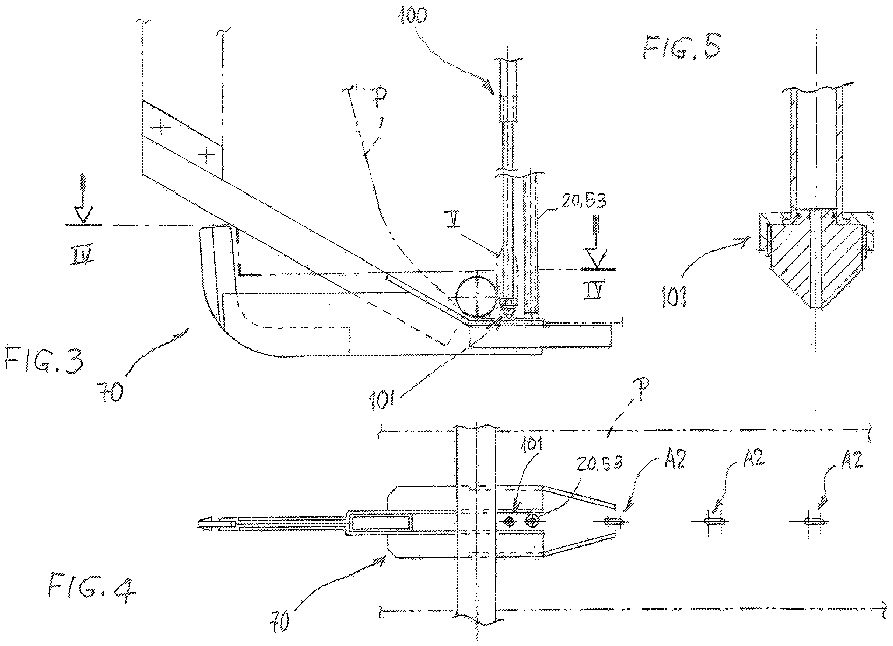

In addition, said seed sowing machine S comprises:
- means for supporting, unwinding and depositing a mulching sheet P (figure 3) wound in at least one reel 80.7 (figure 1), wherein, during advance of said tractor S, a portion of said mulching sheet P is unwound from said at least one reel 80.7, which is held on the ground by means of at least one free end area, arranged upstream of an initial end of said at least one furrow, according to the direction of advance of the tractor,
- wherein said portion of said mulching sheet P, which is unwound from said at least one reel 80.7, is arranged below and close to said seed ejection mouth of said pneumatic ejection means 20.53 and above said at least one furrow, on which the mulching sheet P is superimposed, and
- wherein the seeds are projected in sequence through said ejection mouth of said pneumatic ejection means 20.53 and are sequentially deposited in said at least one furrow.

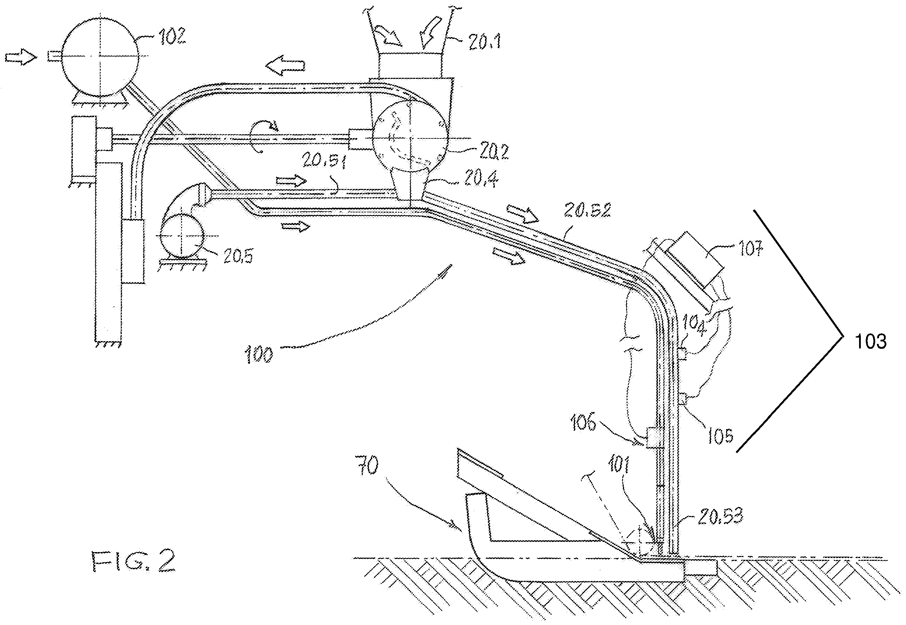

According to the present invention, said seed sowing machine S further comprises:
- pneumatic perforation means 100 of said portion of said mulching sheet P, including a pneumatic seal tube and a pneumatic nozzle 101 (figures 2, 3, 5), configured for the perforation of the mulching sheet P and which is sealably connected to one end of said pneumatic perforation means 100, and is arranged above said portion of said mulching sheet, upstream, in the direction of advancement of said tractor, and in the proximity of said seed ejection mouth of said pneumatic ejection means 20.53, and at said at least one furrow below said sheet;
- second pneumatic means 102 generators/dispensers of pressurized air, arranged upstream and sealably connected to another end of said pneumatic perforation means 100 and which produce/direct a flow of compressed air through said pneumatic perforation means 100 of said sheet P. In the illustrated example, said pneumatic generator/dispenser means 102 include a tank of pressurized air supported in said seed sowing machine S and pneumatically connected with respect to air compressor means of the tractor (not shown);
- electric/electronic control means 103 of the selective ejection of said compressed air flow, through said pneumatic perforation nozzle 101, in synchronism with the ejection of each seed through said seed ejection mouth of said pneumatic ejection means 20.53. Said electric/electronic control means 103 comprise:
- first electric/electronic presence sensor means 104, for example proximity sensor means, configured to detect each seed in transit along a first section of said pneumatic seed ejection means 20.53, in a first instant of time t1 of said transit, and emit a corresponding first electrical output signal;
- second electric/electronic presence sensor means 105, for example proximity sensor means, configured to detect each seed in transit along a second section of said pneumatic seed ejection means 20.53, in a second instant of time t2 of said transit, following said first instant of time t1, and emit a corresponding second electrical output signal;
- solenoid valve means 106, arranged upstream of said pneumatic perforation nozzle 101 and configured for selectively intercepting the emission of said compressed air flow through said pneumatic perforation nozzle 101;
- electronic processing and calculation means 107, which are connected in electric circuit with respect to said first electric/electronic sensor means 104, to said second electric/electronic sensor means 105 and said solenoid valve means 106 and are configured and programmed for selectively determining the pneumatic opening of said solenoid valve means 106, when said first sensor means 104 emit said first electrical output signal, and the pneumatic closure of said solenoid valve means 106, when said second sensor means 105 emit said second electrical output signal.

In particular, said first electric/electronic sensor means 104 and said second electric/electronic sensor means 105 are arranged at said pneumatic seed ejection means 20.53 upstream of said ejection mouth.

By this arrangement, while a seed coming from said seed distribution and separation means 20.2 is pneumatically conveyed along said seeds conveying means 20.4, 20.52 up to said pneumatic seed ejection means 20.53 towards said ejection mouth:
- said second pneumatic means 102 generators/dispensers of pressurized air produce and direct a flow of compressed air through said pneumatic means 100 for perforating a portion of said sheet P towards said pneumatic perforation nozzle 101;
- said first proximity sensor means 104 detect said seed in transit along a first section of said pneumatic seed ejection means 20.53, in a first instant of time t1 of said transit, and emit a corresponding first electrical output signal, received from said electronic processing and calculation means 107, which emit a corresponding electrical pneumatic opening signal, received from said solenoid valve means 106, which are switched to the pneumatic opening position and allow the passage of said compressed air flow generated/dispensed by said second pneumatic generator means 102 through said pneumatic perforation nozzle 101;
- said second electric/electronic proximity sensor means 105 then detect the seed itself in transit along a second section of said pneumatic seed ejection means 20.53, in a second instant of time t2 of said transit, following said first instant of time t1, and emit a corresponding second and subsequent electrical output signal, received from said processing and calculation means 107, which emit a corresponding electrical pneumatic closing signal, received from said solenoid valve means 106, which are switched to pneumatic closure position and inhibit the passage of said compressed air flow generated by said second pneumatic generator/dispenser means 102 through said pneumatic perforation nozzle 101.

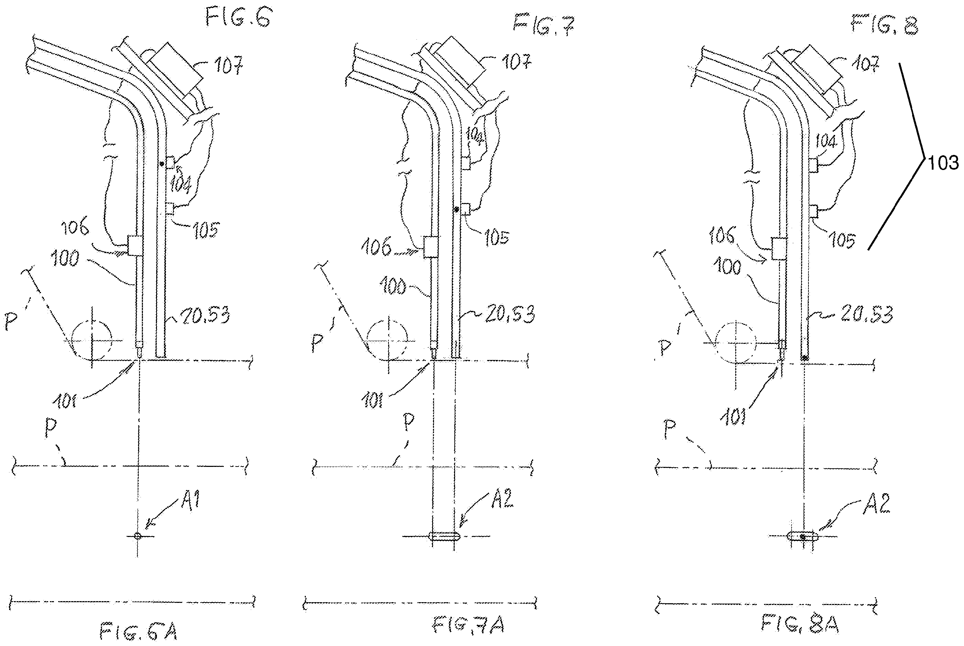

When said solenoid valve means 106 are initially pneumatically opened, said flow of pressurized air exits through said pneumatic perforation nozzle 101 and strikes a corresponding part of said portion of mulching sheet P, perforating the sheet itself and forming an initial opening A1 (figure 6A).

In particular, said pneumatic perforation nozzle 101 has a compressed air outlet hole of predetermined diameter, the axis whereof is essentially perpendicular to the underlying part of the mulching sheet portion P, and which is configured to perform a pneumatic perforation of the sheet P as a cutting blade of thickness substantially corresponding to the diameter of the hole. Said pneumatic perforation nozzle 101 is pneumatically connected with respect to said perforation means 100 in a dismountable and interchangeable manner with pneumatic perforation nozzles having air emission holes of different diameters.

The aforementioned perforation action of the mulching sheet P takes place during the time interval from t1 to t2 (it starts at the instant t1 and ceases at the instant t2), forming in the mulching sheet P a corresponding elongated end opening A2 (figure 7A). The duration of said time interval is determined, inter alia, on the basis of the distance between said first proximity sensor means 104 and said second proximity sensor means 105 and the pressure of the air under pressure generated/dispensed by said second pneumatic generator/dispensing means 102 and existing in said pneumatic perforation means 100, and is commensurate with the distance between the axis of said compressed air outlet hole of the pneumatic perforation nozzle 101 and the axis of the ejection mouth of the pneumatic seed ejection means 20.53, so that the seed which is ejected from said ejection mouth passes through said elongated end opening A2 in an intermediate position between the longitudinal ends of the opening A2 itself (figure 8A).

The sequence illustrated in figures 6, 6A, 7, 7A, 8, 8A shows in detail the various steps described above for forming the partial initial opening A1 up to the elongated end opening A2 in the mulching sheet portion P corresponding to the pneumatic perforation nozzle 101 of the pneumatic perforation means 100, during the advancement of the tractor and the passage of a seed between said first sensor means 104 and said second sensor means 105 and finally shows the ejection of the seed itself through the ejection mouth of the pneumatic seed ejection means 20.53, at an intermediate part of said elongated end opening A2 in the sheet P.

It will be seen that, during the advancement of the tractor and the unwinding of said mulching sheet P, the following operations are repeated sequentially:
- emission of a compressed air flow through said pneumatic perforation nozzle 101, and consequent formation of a respective elongated opening A2 in a first part (corresponding to said nozzle 101), of said mulching sheet portion P, through which a respective seed is projected - by means of the ejection mouth of said pneumatic ejection means 20.53 -, which is deposited in the furrow below said sheet portion P, and subsequent interception of said compressed air flow through said pneumatic perforation nozzle 101, and consequently maintaining the integrity of a second part of said portion of said mulching sheet P, subsequent in the direction of advancement of the tractor and adjacent to said elongated opening A2, these operations being repeated for each seed ejected through said seed ejection mouth of said pneumatic ejection means 20.53, so as to form in said portion of said mulching sheet P, which is deposited on the ground during the advancement of said tractor, a linear succession of elongated openings A2 corresponding to said at least one furrow;
- sequential sowing of the seeds which are ejected through said expulsion mouth of said pneumatic ejection means 20.53 and which each pass through a respective elongated opening A2 just formed and are thus deposited in said at least one furrow, so as to each seed corresponds to an opening A2 having dimensions and shape configured for the escape, with respect to said sheet portion P, of the seedling that sprouts from the seed itself.

It will be noted that although first pneumatic means have been shown and described which produce and direct a flow of compressed air along said seed conveying means and second pneumatic means generating/dispensing pressurized air, which produce and direct a flow of compressed air through said pneumatic perforation means of said sheet, in a variant a single source of pressurized air may be provided, suitably branched in a pneumatic manner with respect to said seed conveying means and said pneumatic means for perforating the sheet.

As is apparent from the foregoing, the present invention provides a seeding method by means of a seed sowing machine connected to a tractor and a seed sowing machine, which allow achieving in a simple and effective manner the objects set forth in the introduction of the present description.

## Claims

1. Seeding method by means of a seed sowing machine (S) connected to a tractor and which comprises:
- at least one hopper (20.1) for containing a mass of seeds and distribution and separating means (20.2) of the seeds contained in said at least one hopper for sowing in at least one furrow in a portion of ground to be sown below said seed sowing machine (S);
- furrower means (70) that, during advance of the tractor on said portion of ground to be sown, form said at least one furrow, in which the seeds distributed and separated by means of said seed distribution and separating means (20.2) are deposited, the method comprising the steps consisting of:
- providing in said seed sowing machine (S) seed conveying means (20.4, 20.52), to which the seeds distributed and separated by means of said seed distribution and separating means (20.2) are delivered;
- providing in said seed sowing machine (S) first pneumatic means (20.5, 20.51) that produce and direct a compressed air flow by means of said seed conveying means (20.4, 20.52);
- separately transporting each seed, coming from said seed distribution and separating means (20.2), by means of said compressed air flow, by means of said seed conveying means (20.4, 20.52);
- providing in said seed sowing machine (S) pneumatic ejection means (20.53) of the seeds to be deposited, which are connected in an air-tight manner downstream with respect to said seed conveying means (20.4, 20.52), according to the direction of said compressed air flow, and have an end part configured as seed ejection mouth;
- arranging said seed ejection mouth of said pneumatic ejection means (20.53) above said at least one furrow;
- propelling and ejecting by means of said compressed air flow each seed, distributed and separated from said mass of seeds, through said ejection mouth of said pneumatic ejection means (20.53), towards said at least one furrow, sowing a plurality of seeds sequentially in said at least one furrow;
said method being **characterized by** the steps consisting of:
- providing in said seed sowing machine (S) means for supporting, unwinding and depositing a mulching sheet (P) so that, during advance of said tractor (S), at least one mulching sheet (P) is unwound from at least one reel (80.7) of mulching sheet, which is held on the ground by means of at least one free end area, arranged upstream of an initial end of said at least one furrow, according to the direction of advance of the tracto r;
- arranging a portion of said mulching sheet (P), which is unwound from said at least one reel (80.7), below and close to said seed ejection mouth of said pneumatic ejection means (20.53) and above said at least one furrow, on which the mulching sheet (P) is superimposed;
- providing in said seed sowing machine (S) pneumatic perforation means (100) for perforating said portion of said mulching sheet (P), including a pneumatic nozzle (101) configured for perforating the mulching sheet (P), and arranging said pneumatic perforation nozzle (101) above said portion of said mulching sheet (P), upstream, in the direction of advancement of said tractor, and in the proximity of said seed ejection mouth of said pneumatic ejection means (20.53) of the seeds, and at said at least one furrow below said sheet (P);
- providing in said seed sowing machine (S) second pneumatic means (102) which produce and/or direct a flow of compressed air through said pneumatic perforation means (100) for perforating said sheet (P) up to said pneumatic perforation nozzle (101);
- providing in said seed sowing machine (S) electric/electronic control means (103) for the selective ejection of said compressed air flow, through said pneumatic perforation nozzle (101), in synchronism with the ejection of each seed through said seed ejection mouth of said pneumatic ejection means (20.53);
- producing and directing a flow of compressed air through said pneumatic perforation means (100) for perforating said sheet (P) up to said pneumatic perforation nozzle (101);
- controlling the selective emission of said compressed air flow, through said pneumatic perforation nozzle (101), in synchronism with the ejection of each seed through said seed ejection mouth of said pneumatic ejection means (20.53) by means of said electric/electronic control means (103), so as to:
- forming in said portion of said mulching sheet (P) an opening (A1, A2), by means of a flow of compressed air emitted through said pneumatic nozzle (101) for perforating said sheet (P), before a respective seed is ejected through said seed ejection mouth of said pneumatic ejection means (20.53);
- intercepting said compressed air flow through said pneumatic perforation nozzle (101) at least after the ejection of each seed through said seed ejection mouth of said pneumatic ejection means (20.53);
- sequentially repeating the forming operations of a respective opening (A1, A2) in said portion of said mulching sheet (P), by means of a flow of compressed air emitted through said pneumatic perforation nozzle (101) and of interception of said compressed air flow through said pneumatic perforation nozzle (101), for each seed ejected through said seed ejection mouth of said pneumatic ejection means (20.53),
so as to form in said portion of said mulching sheet (P), which is deposited on the ground during advance of said tractor, a series of openings (A1, A2) corresponding to said at least one furrow, produced by means of perforation of the sheet (P) by said pneumatic perforation means (101) and through which the seeds are made to pass, respectively and sequentially, which are propelled through said ejection mouth of said pneumatic ejection means (20.53) and which are deposited in said at least one furrow.

2. Method according to claim 1, **characterized in that** it comprises for said electric/ electronic control means (103) the steps consisting of:
- providing first electric/electronic presence sensor means (104), configured for detecting each seed in transit along a first section of said seed conveying means (20.4, 20.52), respectively of said pneumatic seed ejection means (20.53), in a first instant of time (t1) of said transit, and emitting a corresponding first electrical output signal;
- providing second electric/electronic presence sensor means (105), configured for detecting each seed in transit along a second section of said seed conveying means (20.4, 20.52), respectively of said pneumatic seed ejection means (20.53), at a second instant of time (t2) of said transit, following said first time instant (t1), and emitting a corresponding second electrical output signal;
- providing solenoid valve means (106) configured for selectively intercepting the emission of said compressed air flow through said pneumatic perforation nozzle (101);
- providing electronic processing and calculation means (107), which are connected in electric circuit with respect to said first electric/electronic presence sensor means (104), to said second electric/electronic presence sensor means (105) and said solenoid valve means (106) and are configured and programmed for selectively determining the pneumatic opening of said solenoid valve means (106), when said first sensor means (104) emit said first electrical output signal, and the pneumatic closure of said solenoid valve means (106), when said second sensor means (105) emit said second electrical output signal.

3. Method according to claim 2, wherein said first presence sensor means (104) and said second presence sensor means (105) are configured as proximity sensor means.

4. Method according to one or more of the preceding claims, **characterized in that**, during the advancement of the tractor and the unwinding of said mulching sheet (P), the following operations are repeated sequentially:
- emission of a compressed air flow through said pneumatic perforation nozzle (101), and consequent formation of a respective elongated opening (A2) in a first part, corresponding to said pneumatic nozzle (101), of said mulching sheet portion (P), through which a respective seed is projected - by means of the ejection mouth of said pneumatic ejection means (20.53) -, which is deposited in the furrow below said sheet portion (P), and subsequent interception of said compressed air flow through said pneumatic perforation nozzle (101), and consequently maintaining the integrity of a second part of said portion of said mulching sheet (P), subsequent in the direction of advancement of the tractor and adjacent to said elongated opening (A2), these operations being repeated for each seed ejected through said seed ejection mouth of said pneumatic ejection means (20.53), so as to form in said portion of said mulching sheet (P), which is deposited on the ground during the advancement of said tractor, a linear succession of elongated openings (A2) corresponding to said at least one furrow;
- sequential sowing of the seeds which are ejected through said expulsion mouth of said pneumatic ejection means (20.53) and which each pass through a respective elongated opening (A2) just formed and are deposited in said at least one furrow, so as to each seed corresponds to an opening (A2) having dimensions and shape configured for the escape, with respect to said sheet portion (P), of the seedling that sprouts from the seed itself.

5. Method according to claims 2 or 3 or to claim 4 in combination with one of claims 2 or 3, **characterized in that** the duration of the time interval between said first time instant (t1) and said second time instant (t2) is determined based on the distance between said first electric/electronic sensor means (104) and said second electric/electronic sensor means (105) and at the pressure of the air under pressure generated and/or supplied by said second generator means (102) and acting in said pneumatic perforation means (100) and is commensurate with the distance between the axis of the compressed air outlet hole of said pneumatic perforation nozzle (101) and the axis of the ejection mouth of said pneumatic seed ejection means (20.53) so that the seed that is ejected from said ejection mouth passes through said opening (A2) of the sheet (P) in an intermediate position between the longitudinal ends of the opening (A2) itself.

6. Seed sowing machine (S) connected to a tractor, comprising:
- at least one hopper (20.1) for containing a mass of seeds and distribution and separating means (20.2) of the seeds contained in said at least one hopper for sowing in at least one furrow in a portion of ground to be sown below said seed sowing machine (S);
- furrower means (70) that, during advance of the tractor on said portion of ground to be sown, form said at least one furrow, in which the seeds distributed and separated by means of said seed distribution and separating means (20.2) are deposited;
- seed conveying means (20.4, 20.52), to which the seeds distributed and separated by means of said seed distribution and separating means (20.2) are delivered;
- first pneumatic means (20.5, 20.51) generating air under pressure that produce and/or direct a compressed air flow along said seed conveying means (20.4, 20.52), said compressed air flow separately transporting each seed, coming from said seed distribution and separating means (20.2), through said seed conveying means (20.4, 20.52);
- pneumatic ejection means (20.53) of the seeds to be deposited, which are connected in an air-tight manner downstream with respect to said seed conveying means (20.4, 20.52), according to the direction of said compressed air flow, and have an end part configured as seed ejection mouth arranged over said at least one furrow;
- wherein each seed, distributed and separated from said mass of seeds, is propelled and ejected by means of said compressed air flow through said ejection mouth of said pneumatic ejection means (20.53) towards said at least one furrow;
said seed sowing machine (S) being **characterized in that** it comprises:
- means for supporting, unwinding and depositing a mulching sheet (P) wound in at least one reel (80.7), wherein, during advance of said tractor (S), a portion of said mulching sheet (P) is unwound from said at least one reel (80.7), which is held on the ground by means of at least one free end area, arranged upstream of an initial end of said at least one furrow, according to the direction of advance of the tractor;
- wherein said portion of said mulching sheet (P), which is unwound from said at least one reel (80.7), is arranged below and close to said seed ejection mouth of said pneumatic ejection means (20.53) and above said at least one furrow, on which the mulching sheet (P) is superimposed, and
- wherein the seeds are projected in sequence through said ejection mouth of said pneumatic ejection means (20.53) and are sequentially deposited in said at least one furrow;
- pneumatic perforation means (100) of said portion of said mulching sheet (P), including a pneumatic seal tube and a pneumatic nozzle (101), configured for the perforation of the mulching sheet (P) and which is sealably connected to one end of said pneumatic perforation means (100), and is arranged above said portion of said mulching sheet (P), upstream, in the direction of advancement of said tractor, and in the proximity of said seed ejection mouth of said pneumatic ejection means (20.53), and at said at least one furrow below said sheet;
- second pneumatic means (102) in the form of generators or dispensers of pressurized air, arranged upstream and sealably connected to another end of said pneumatic perforation means (100) and which produce/direct a flow of compressed air through said pneumatic perforation means (100) for perforating said sheet (P);
- electric/electronic control means (103) of the selective ejection of said compressed air flow, through said pneumatic perforation nozzle (101), in synchronism with the ejection of each seed through said seed ejection mouth of said pneumatic ejection means (20.53).

7. Seed sowing machine according to claim 6, **characterized in that** said electric/electronic control means (103) comprise:
- first electric/electronic presence sensor means (104), configured for detecting each seed in transit along a first section of said seed conveying means (20.4, 20.52), respectively of said pneumatic seed ejection means (20.53), in a first instant of time (t1) of said transit, and emitting a corresponding first electrical output signal;
- second electric/electronic presence sensor means (105), configured for detecting each seed in transit along a second section of seed conveying means (20.4, 20.52), respectively of said pneumatic seed ejection means (20.53), at a second instant of time (t2) of said transit, following said first time instant (t1), and emitting a corresponding second electrical output signal;
- solenoid valve means (106), arranged upstream of said pneumatic perforation nozzle (101) and configured for selectively intercepting the emission of said compressed air flow through said pneumatic perforation nozzle (101);
- electronic processing and calculation means (107), which are connected in electric circuit with respect to said first electric/electronic sensor means (104), to said second electric/electronic sensor means (105) and said solenoid valve means (106) and are configured and programmed for selectively determining the pneumatic opening of said solenoid valve means (106), when said first sensor means (104) emit said first electrical output signal, and the pneumatic closure of said solenoid valve means (106), when said second sensor means (105) emit said second electrical output signal.

8. Seed sowing machine (S) according to claim 7, **characterized in that** said first electric/electronic sensor means (104) and said second electric/electronic sensor means (105) are arranged at said pneumatic seed ejection means (20.53) upstream of said ejection mouth of said pneumatic seed ejection means (20.53).

9. Seed sowing machine (S) according to claim 7 and/or 8, **characterized in that** said first electric/electronic sensor means (104) and said second electric/electronic sensor means (105) are configured as proximity sensor means.

10. Seed sowing machine (S) according to one or more of the preceding claims, **characterized in that** said perforation nozzle (101) has a pressurized air outlet hole of predetermined diameter, the axis whereof is essentially perpendicular to the underlying part of said mulching sheet portion (P), and which is configured to perform a pneumatic perforation of the sheet (P) as a cutting blade of thickness substantially corresponding to the diameter of the hole.

11. Seed sowing machine (S) according to one or more of the preceding claims, **characterized in that** said pneumatic perforation nozzle (101) is pneumatically connected with respect to said perforation means (100) in a dismountable and interchangeable manner with pneumatic perforation nozzles having air emission holes of different diameters.

## Patentansprüche

1. Aussaatverfahren mittels einer Sämaschine (S), die an einen Traktor angeschlossen ist und Folgendes umfasst:
- mindestens einen Fülltrichter (20.1) zur Aufnahme einer Samenmasse und Mittel (20.2) zur Verteilung und Vereinzelung von in dem besagten mindestens einen Fülltrichter enthaltenen Samen für die Aussaat in mindestens einer Furche in einem zu besäenden Bodenabschnitt unterhalb der besagten Sämaschine (S);
- Furchenmittel (70), die, während der Vorwärtsfahrt des Traktors über den besagten zu besäenden Bodenabschnitt, die besagte mindestens eine Furche bilden, in der die mittels der besagten Mittel (20.2) zur Verteilung und Vereinzelung von Samen verteilten und vereinzelten Samen abgelegt werden, wobei das Verfahren die Phasen umfasst, bestehend in:
- dem Vorsehen in der besagten Sämaschine (S) von Samenfördermitteln (20.4, 20.52), in die die mittels der besagten Mittel (20.2) zur Verteilung und Vereinzelung von Samen verteilten und vereinzelten Samen gelangen;
- dem Vorsehen in der besagten Sämaschine (S) von ersten pneumatischen Mitteln (20.5, 20.51), die einen Druckluftstrom durch die besagten Samenfördermittel (20.4, 20.52) erzeugen und leiten;
- dem einzelnen Transportieren jedes Samens, der aus den besagten Mitteln (20.2) zur Verteilung und Vereinzelung von Samen stammt, mittels des besagten Druckluftstroms durch die besagten Samenfördermittel (20.4, 20.52);
- dem Vorsehen in der besagten Sämaschine (S) von pneumatischen Auswurfmitteln (20.53) von abzulegenden Samen, die pneumatisch abgedichtet und stromabwärts in Bezug auf die besagten Samenfördermittel (20.4, 20.52) entsprechend der Richtung des besagten Druckluftstroms angeschlossen sind und ein als Samenausstoßöffnung konfiguriertes Endteil aufweisen;
- dem Anordnen der besagten Samenausstoßöffnung der besagten pneumatischen Auswurfmittel (20.53) oberhalb der besagten mindestens einen Furche;
- dem Herausschleudern und Ausstoßen mittels des besagten Druckluftstroms jedes Samens, der aus der besagten Samenmasse verteilt und vereinzelt wird, durch die besagte Ausstoßöffnung der besagten pneumatischen Auswurfmittel (20.53) in Richtung der besagten mindestens eine Furche, wobei eine Vielzahl von Samen nacheinander in die besagte mindestens eine Furche gesät wird;
wobei das besagte Verfahren durch die Phasen gekennzeichnet ist, bestehend in:
- dem Vorsehen in der besagten Sämaschine (S) von Mitteln zum Tragen, Abwickeln und Ablegen einer Mulchfolie (P), so dass, während der Vorwärtsfahrt des besagten Traktors (S), von mindestens einer Mulchfolienrolle (80.7) mindestens eine Mulchfolie (P) abgewickelt wird, die durch mindestens einen freien Endbereich, der stromaufwärts von einem Anfangsende der besagten mindestens einen Furche angeordnet ist, gemäß der Vorwärtsfahrtrichtung des Traktors, auf dem Boden gehalten wird;
- dem Anordnen eines Abschnitts der besagten Mulchfolie (P), der von der besagten mindestens einen Rolle (80.7) abgewickelt wird, unterhalb und in der Nähe der besagten Samenausstoßöffnung der besagten pneumatischen Auswurfmittel (20.53) und oberhalb der besagten mindestens einen Furche, über die die Mulchfolie (P) gelegt wird;
- dem Vorsehen in der besagten Sämaschine (S) von pneumatischen Perforationsmitteln (100) zum Perforieren des besagten Abschnitts der besagten Mulchfolie (P), die eine pneumatische Düse (101) einschließen, die zum Perforieren der Mulchfolie (P) konfiguriert ist, und dem Anordnen der besagten pneumatischen Perforationsdüse (101) oberhalb des besagten Abschnitts der besagten Mulchfolie (P), stromaufwärts in der Vorwärtsfahrtrichtung des besagten Traktors, und in der Nähe der besagten Samenausstoßöffnung der besagten pneumatischen Samenauswurfmittel (20.53) und in Übereinstimmung mit der besagten mindestens einen Furche unterhalb der besagten Folie (P);
- dem Vorsehen in der besagten Sämaschine (S) von zweiten pneumatischen Mitteln (102), die einen Druckluftstrom durch die besagten pneumatischen Perforationsmittel (100) zum Perforieren der besagten Folie (P) bis hin zu der besagten pneumatischen Perforationsdüse (101) erzeugen und/oder leiten;
- dem Vorsehen in der besagten Sämaschine (S) von elektrischen/elektronischen Mitteln zur Steuerung (103) des selektiven Ausstoßes des besagten Druckluftstroms durch die besagte pneumatische Perforationsdüse (101) synchron mit dem Ausstoß jedes Samens durch die besagte Samenausstoßöffnung der pneumatischen Auswurfmittel (20.53);
- dem Erzeugen und dem Leiten eines Druckluftstroms durch die besagten pneumatischen Perforationsmittel (100) zum Perforieren der besagten Folie (P) bis hin zu der besagten pneumatischen Perforationsdüse (101);
- dem Steuern des selektiven Ausstoßes des besagten Druckluftstroms durch die besagte pneumatische Perforationsdüse (101) synchron mit dem Ausstoß jedes Samens durch die besagte Samenausstoßöffnung der besagten pneumatischen Auswurfmittel (20.52) mittels der besagten elektrischen/elektronischen Steuermittel (103), um:
- in dem besagten Abschnitt der besagten Mulchfolie (P) eine Öffnung (A1, A2) zu bilden mittels eines Druckluftstroms, der durch die besagte pneumatische Perforationsdüse (101) der besagten Folie (P) ausgestoßen wird, bevor ein entsprechender Samen durch die besagte Samenausstoßöffnung der besagten pneumatischen Auswurfmittel (20.53) ausgeworfen wird;
- dem Abfangen des besagten Druckluftstroms durch die besagte pneumatische Perforationsdüse (101) mindestens nach dem Auswurf jedes Samens durch die besagte Samenausstoßöffnung der besagten pneumatischen Auswurfmittel (20.53);
- dem sequentiellen Wiederholen der Vorgänge des Bildens einer jeweiligen Öffnung (A1, A2) in dem besagten Abschnitt der besagten Mulchfolie (P) mittels eines durch die besagte pneumatische Perforationsdüse (101) abgegebenen Druckluftstroms, und des Abfangens des besagten Druckluftstroms durch die pneumatische Perforationsdüse (101) für jeden durch die besagte Samenausstoßöffnung der besagten pneumatischen Auswurfmittel (20.53) ausgeworfenen Samen,
derart, dass in dem besagten Abschnitt der besagten Mulchfolie (P), die während der Vorwärtsfahrt des besagten Traktors auf dem Boden abgelegt wird, eine Folge von Öffnungen (A1, A2) gebildet wird, entsprechend der besagten mindestens einen Furche, die durch Perforieren der Folie (P) mittels der besagten pneumatischen Perforationsmittel (101) realisiert werden und durch die die Samen, die durch die besagte Ausstoßöffnung der besagten pneumatischen Auswurfmittel (20.53) herausgeschleudert und in der besagten mindestens einen Furche abgelegt werden, jeweils und nacheinander hindurchgeführt werden.

2. Verfahren gemäß Anspruch 1, **dadurch gekennzeichnet, dass** es für die besagten elektrischen/elektronischen Steuermittel (103) die Phasen umfasst, bestehend in:
- dem Vorsehen von ersten elektrischen/elektronischen Anwesenheitssensormitteln (104), die konfiguriert sind, um jeden Samen beim Durchgang entlang einer ersten Strecke der besagten Samenfördermittel (20.4, 20.52) bzw. der besagten pneumatischen Samenauswurfmittel (20.53) zu einem ersten Zeitpunkt (t1) des besagten Durchgangs zu erfassen und ein entsprechendes erstes elektrisches Ausgangssignal abzugeben;
- dem Vorsehen von zweiten elektrischen/elektronischen Anwesenheitssensormitteln (105), die konfiguriert sind, um jeden Samen beim Durchgang entlang einer zweiten Strecke der besagten Samenfördermittel (20.4, 20.52) bzw. der besagten pneumatischen Samenauswurfmittel (20.53) zu einem zweiten Zeitpunkt (t2) des besagten Durchgangs zu erfassen, nach dem besagten ersten Zeitpunkt (t1), und ein entsprechendes zweites elektrisches Ausgangssignal abzugeben;
- dem Vorsehen von Elektroventilmitteln (106), die konfiguriert sind, um selektiv die Emission des besagten Druckluftstroms durch die besagte pneumatische Perforationsdüse (101) abzufangen;
- dem Vorsehen von elektronischen Auswertungs- und Berechnungsmitteln (107), die in einem elektrischen Kreislauf mit den besagten ersten elektrischen/elektronischen Anwesenheitssensormitteln (104), mit den besagten zweiten elektrischen/elektronischen Anwesenheitssensormitteln (105) und mit den besagten Elektroventilmitteln (106) verbunden sind und konfiguriert und programmiert sind, um selektiv zu bestimmen das pneumatische Öffnen der besagten Elektroventilmittel (106), wenn die besagten ersten Sensormittel (104) das besagte erste elektrische Ausgangssignal ausgeben, und das pneumatische Schließen der besagten Elektroventilmittel (106), wenn die besagten zweiten Sensormittel (105) das besagte zweite elektrische Ausgangssignal ausgeben.

3. Verfahren gemäß Anspruch 2, wobei die besagten ersten Anwesenheitssensormittel (104) und die besagten zweiten Anwesenheitssensormittel (105) als Näherungssensormittel konfiguriert sind.

4. Verfahren gemäß einem oder mehreren der vorhergehenden Ansprüche, **dadurch gekennzeichnet, dass** während der Vorwärtsfahrt des Traktors und des Abwickelns der besagten Mulchfolie (P) die folgenden Vorgänge nacheinander wiederholt werden:
- Ausstoßen eines Druckluftstroms durch die besagte pneumatische Perforationsdüse (101) und anschließende Bildung einer entsprechenden länglichen Öffnung (A2) in einem ersten Teil, der der besagten pneumatischen Düse (101) entspricht, des besagten Abschnitts der Mulchfolie (P), durch die - mittels der Ausstoßöffnung der besagten pneumatischen Auswurfmittel (20.53) - ein jeweiliger Samen ausgestoßen wird, der sich in der Furche unterhalb des besagten Abschnitts der besagten Folie (P) absetzt, und anschließendes Abfangen des besagten Druckluftstroms durch die besagte pneumatische Perforationsdüse (101), und konsequentes Aufrechterhalten der Unversehrtheit eines zweiten Teils des besagten Abschnitts der besagten Mulchfolie (P), nachfolgend in der Vorwärtsfahrtrichtung des Traktors und in der Nähe der besagten länglichen Öffnung (A2), wobei diese Vorgänge für jeden Samen, der durch die besagte Ausstoßöffnung der besagten pneumatischen Auswurfmittel (20.53) ausgestoßen wird, wiederholt werden, so dass in dem besagten Abschnitt der besagten Mulchfolie (P), die während der Vorwärtsfahrt des besagten Traktors auf dem Boden abgelegt wird, eine lineare Abfolge von länglichen Öffnungen (A2) gebildet wird, die der mindestens einen Furche entsprechen;
- sequentielle Aussaat der Samen, die durch die besagte Ausstoßöffnung der besagten pneumatischen Auswurfmittel (20.53) ausgestoßen werden und die jeweils eine entsprechende längliche Öffnung (A2), die gerade gebildet wurde, durchqueren und in der besagten mindestens einen Furche abgelegt werden, so dass jedem Samen eine Öffnung (A2) entspricht, die eine Größe und Form besitzt, konfiguriert für die Entwicklung, in Bezug auf den besagten Abschnitt der Folie (P), des Pflänzchens, das aus dem Samen keimen wird.

5. Verfahren gemäß den Ansprüchen 2 oder 3 oder Anspruch 4 in Kombination mit einem der Ansprüche 2 oder 3, **dadurch gekennzeichnet, dass** die Dauer des Zeitintervalls zwischen dem besagten ersten Zeitpunkt (t1) und dem besagten zweiten Zeitpunkt (t2) bestimmt wird auf der Grundlage des Abstands zwischen den besagten ersten elektrischen/elektronischen Sensormitteln (104) und den besagten zweiten elektrischen/elektronischen Sensormitteln (105) und des Drucks der unter Druck stehenden Luft, die von den besagten zweiten Erzeugungsmitteln (102) erzeugt und/oder verteilt wird und in den besagten pneumatischen Perforationsmitteln (100) vorherrscht, und angepasst wird dem Abstand zwischen der Achse des Druckluftaustrittslochs der besagten pneumatischen Perforationsdüse (101) und der Achse der Ausstoßöffnung der besagten pneumatischen Samenauswurfmittel (20.53), so dass der aus der besagten Ausstoßöffnung ausgestoßene Samen die besagte Öffnung (A2) der Folie (P) in einer Zwischenposition zwischen den Längsenden der Öffnung (A2) selbst durchquert.

6. Sämaschine (S), verbunden mit einem Traktor, umfassend:
- mindestens einen Fülltrichter (20.1) zur Aufnahme einer Samenmasse und Mittel (20.2) zur Verteilung und Vereinzelung von in dem besagten mindestens einen Fülltrichter enthaltenen Samen für die Aussaat in mindestens einer Furche in einem zu besäenden Bodenabschnitt unterhalb der besagten Sämaschine (S);
- Furchenmittel (70), die, während der Vorwärtsfahrt des Traktors über den besagten zu besäenden Bodenabschnitt, die besagte mindestens eine Furche bilden, in der die mittels der besagten Mittel (20.2) zur Verteilung und Vereinzelung von Samen verteilten und vereinzelten Samen abgelegt werden;
- Samenfördermittel (20.4, 20.52), in die die mittels der besagten Mittel (20.2) zur Verteilung und Vereinzelung von Samen verteilten und vereinzelten Samen gelangen;
- erste pneumatische Mittel (20.5, 20.51), Drucklufterzeuger, die einen Druckluftstrom entlang der besagten Samenfördermittel (20.4, 20.52) erzeugen und/oder leiten, wobei der Druckluftstrom einzeln jeden Samen, der aus den besagten Mitteln (20.2) zur Verteilung und Vereinzelung von Samen stammt, durch die besagten Samenfördermittel (20.4, 20.52) transportiert;
- pneumatische Auswurfmittel (20.53) der abzulegenden Samen, die pneumatisch abgedichtet und stromabwärts in Bezug auf die besagten Samenfördermittel (20.4, 20.52) entsprechend der Richtung des besagten Druckluftstroms angeschlossen sind und ein als Samenausstoßöffnung konfiguriertes Endteil aufweisen, das oberhalb der besagten einen Furche angeordnet ist;
- wobei jeder Samen, der aus der besagten Samenmasse verteilt und vereinzelt wird, mittels des besagten Druckluftstroms durch die besagte Ausstoßöffnung der besagten pneumatischen Auswurfmittel (20.53) herausgeschleudert und in Richtung der besagten mindestens einen Furche ausgestoßen wird;
wobei die besagte Sämaschine (S) **dadurch gekennzeichnet ist, dass** sie Folgendes umfasst;
- Mittel zum Tragen, Abwickeln und Ablegen einer Mulchfolie (P), die auf mindestens eine Rolle (80.7) aufgewickelt ist, wobei, während der Vorwärtsfahrt des besagten Traktors (S), von der besagten mindestens einen Rolle (80.7) ein Abschnitt der besagten Mulchfolie (P) abgewickelt wird, der durch mindestens einen freien Endbereich, der stromaufwärts von einem Anfangsende der besagten mindestens einen Furche angeordnet ist, gemäß der Vorwärtsfahrtrichtung des Traktors, auf dem Boden gehalten wird;
- wobei der besagte Abschnitt der besagten Mulchfolie (P), der von der besagten mindestens einen Rolle (80.7) abgewickelt wird, unterhalb und in der Nähe der besagten Samenausstoßöffnung der besagten pneumatischen Auswurfmittel (20.53) und oberhalb der besagten mindestens einen Furche, über die die Mulchfolie (P) gelegt wird, angeordnet wird, und
- wobei die Samen nacheinander durch die besagte pneumatische Ausstoßöffnung der besagten pneumatischen Auswurfmittel (20.53) herausgeschleudert und nacheinander in der besagten mindestens einen Furche abgelegt werden,
- pneumatische Perforationsmittel (100) des besagten Abschnitts der besagten Mulchfolie (P), die ein pneumatisch abgedichtetes Rohr und eine pneumatische Düse (101) einschließen, konfiguriert zum Perforieren der besagten Mulchfolie (P), die mit einem Ende der besagten pneumatischen Perforationsmittel (100) abgedichtet verbunden und oberhalb des besagten Abschnitts der besagten Mulchfolie (P), stromaufwärts, in der Vorwärtsfahrtrichtung des besagten Traktors und in der Nähe der besagten Samenausstoßöffnung der besagten pneumatischen Auswurfmittel (20.53) und in Übereinstimmung mit der besagten mindestens einen Furche unterhalb der besagten Folie angeordnet ist;
- zweite pneumatische Mittel (102) in Form von Drucklufterzeugern oder -verteilern, die stromaufwärts angeordnet und in Bezug auf ein anderes Ende der besagten pneumatischen Perforationsmittel (100) abgedichtet verbunden sind und die einen Druckluftstrom durch die besagten pneumatischen Perforationsmittel (100) zum Perforieren der besagten Folie (P) erzeugen/leiten;
- elektrische/elektronische Mittel (103) zur Steuerung des selektiven Ausstoßes des besagten Druckluftstroms durch die besagte pneumatische Perforationsdüse (101) synchron mit dem Auswurf jedes Samens durch die besagte Samenausstoßöffnung der besagten pneumatischen Auswurfmittel (20.53).

7. Sämaschine gemäß Anspruch 6, **dadurch gekennzeichnet, dass** die besagten elektrischen/elektronischen Steuermittel (103) Folgendes umfassen:
- erste elektrische/elektronische Anwesenheitssensormittel (104), die konfiguriert sind, um jeden Samen beim Durchgang entlang einer ersten Strecke der besagten Samenfördermittel (20.4, 20.52) bzw. der besagten pneumatischen Samenauswurfmittel (20.53) zu einem ersten Zeitpunkt (t1) des besagten Durchgangs zu erfassen und ein entsprechendes erstes elektrisches Ausgangssignal abzugeben;
- zweite elektrische/elektronische Anwesenheitssensormittel (105), die konfiguriert sind, um jeden Samen beim Durchgang entlang einer zweiten Strecke der Samenfördermittel (20.4, 20.52) bzw. der besagten pneumatischen Samenauswurfmittel (20.53) zu einem zweiten Zeitpunkt (t2) des besagten Durchgangs zu erfassen, nach dem besagten ersten Zeitpunkt (t1), und ein entsprechendes zweites elektrisches Ausgangssignal abzugeben;
- Elektroventilmittel (106), die stromaufwärts von der besagten pneumatischen Perforationsdüse (101) angeordnet und konfiguriert sind, um selektiv die Emission des besagten Druckluftstroms durch die besagte pneumatische Perforationsdüse (101) abzufangen;
- elektronische Auswertungs- und Berechnungsmittel (107), die in einem elektrischen Kreislauf mit den besagten ersten elektrischen/elektronischen Sensormitteln (104), mit den besagten zweiten elektrischen/elektronischen Sensormitteln (105) und mit den besagten Elektroventilmitteln (106) verbunden sind und konfiguriert und programmiert sind, um selektiv zu bestimmen das pneumatische Öffnen der besagten Elektroventilmittel (106), wenn die besagten ersten Sensormittel (104) das besagte erste elektrische Ausgangssignal ausgeben, und das pneumatische Schließen der besagten Elektroventilmittel (106), wenn die besagten zweiten Sensormittel (105) das besagte zweite elektrische Ausgangssignal ausgeben.

8. Sämaschine (S) gemäß Anspruch 7, **dadurch gekennzeichnet, dass** die besagten ersten elektrischen/elektronischen Sensormittel (104) und die besagten zweiten elektrischen/elektronischen Sensormittel (105) in Übereinstimmung mit den besagten pneumatischen Samenauswurfmitteln (20.53) stromaufwärts der besagten Ausstoßöffnung der besagten pneumatischen Samenauswurfmittel (20.53) angeordnet sind.

9. Sämaschine (S) gemäß Anspruch 7 und/oder 8, **dadurch gekennzeichnet, dass** die besagten ersten elektrischen/elektronischen Sensormittel (104) und die besagten zweiten elektrischen/elektronischen Sensormittel (105) als Näherungssensormittel konfiguriert sind.

10. Sämaschine (S) gemäß einem oder mehreren der vorhergehenden Ansprüche, **dadurch gekennzeichnet, dass** die besagte Perforationsdüse (101) ein Druckluftaustrittsloch mit einem vorbestimmten Durchmesser aufweist, dessen Achse im Wesentlichen senkrecht in Bezug auf den darunter liegenden Teil der besagten Mulchfolie (P) verläuft, und dass es konfiguriert ist, um eine pneumatische Perforation der Folie (P) nach Art eines scharfen Messers mit einer Dicke durchzuführen, die im Wesentlichen dem Durchmesser des Lochs entspricht.

11. Sämaschine (S) gemäß einem oder mehreren der vorhergehenden Ansprüche, **dadurch gekennzeichnet, dass** die besagte pneumatische Perforationsdüse (101) in Bezug auf die besagten Perforationsmittel (100) in zerlegbarer und austauschbarer Weise mit pneumatischen Perforationsdüsen, die Luftaustrittslöcher unterschiedlichen Durchmessers besitzen, pneumatisch verbunden ist.

## Revendications

1. Procédé de semis au moyen d'un semoir (S) relié à un tracteur, lequel comprend :
- au moins une trémie (20.1) destinée à contenir une masse de semences et des moyens (20.2) de distribution et de singularisation des semences contenues dans ladite au moins une trémie pour le semis dans au moins un sillon d'une portion de terrain à ensemencer sous ledit semoir (S) ;
- des moyens de création de sillon (70) qui, pendant que le tracteur avance sur ladite portion de terrain à ensemencer, forment ledit au moins un sillon, dans lequel les semences sont déposées, distribuées et singularisées au moyen desdits moyens (20.2) de distribution et de singularisation des semences, le procédé comprenant les phases consistant à :
- fournir dans ledit semoir (S) des moyens convoyeurs de semences (20.4, 20.52), dans lesquels sont déposées les semences distribuées et singularisées par lesdits moyens (20.2) de distribution et de singularisation de semences ;
- fournir dans ledit semoir (S) des premiers moyens pneumatiques (20.5, 20.51) qui produisent et dirigent un flux d'air comprimé à travers lesdits moyens convoyeurs de semences (20.4, 20.52) ;
- transporter chaque semence individuellement, provenant desdits moyens (20.2) de distribution et de singularisation des semences, au moyen dudit flux d'air comprimé, à travers lesdits moyens convoyeurs de semences (20.4, 20.52) ;
- fournir dans ledit semoir (S) des moyens d'éjection pneumatique (20.53) des semences à déposer, lesquels sont raccordés de manière pneumatique et étanche et en aval par rapport auxdits moyens convoyeurs de semences (20.4, 20.52), selon la direction dudit flux d'air comprimé, et présentent une partie terminale configurée en tant qu'orifice d'éjection des semences ;
- disposer ledit orifice d'éjection des semences desdits moyens d'éjection pneumatique (20.53) au-dessus dudit au moins un sillon ;
- projeter et éjecter, au moyen dudit flux d'air comprimé, chaque semence, distribuée et singularisée à partir de ladite masse de semences, à travers ledit orifice d'éjection desdits moyens d'éjection pneumatique (20.53), vers ledit au moins un sillon, en semant une multitude de semences de manière séquentielle dans ledit au moins un sillon ;
ledit procédé étant **caractérisé par** les phases consistant à :
- fournir dans ledit semoir (S) des moyens de support, de déroulement et de dépôt d'une toile de paillage (P) de manière à ce que, lorsque ledit tracteur (S) avance, depuis au moins une bobine (80.7) de toile de paillage soit déroulée au moins une toile de paillage (P), qui est retenue au sol par au moins une zone d'extrémité libre, disposée en amont d'une extrémité initiale dudit au moins un sillon, selon le sens de marche du tracteur ;
- placer une partie de ladite toile de paillage (P), qui est déroulée de ladite au moins une bobine (80.7), au-dessous et à proximité dudit orifice d'éjection des semences desdits moyens d'éjection pneumatique (20.53) et au-dessus dudit au moins un sillon, sur lequel la toile de paillage (P) est superposée ;
- fournir dans ledit semoir (S) des moyens pneumatiques (100) de perforation de ladite portion de ladite toile de paillage (P), comprenant une buse pneumatique (101) configurée pour la perforation de la toile de paillage (P) et disposer ladite buse pneumatique (101) de perforation au-dessus de ladite portion de ladite toile de paillage (P), en amont, dans le sens de marche dudit tracteur, et à proximité dudit orifice d'éjection de semences desdits moyens d'éjection pneumatique (20.53) de semences, et au niveau d'au moins un sillon sous ladite toile (P) ;
- fournir dans ledit semoir (S) des seconds moyens pneumatiques (102) qui produisent et/ou dirigent un flux d'air comprimé à travers lesdits moyens pneumatiques (100) de perforation pour la perforation de ladite toile (P) jusqu'à ladite buse pneumatique (101) de perforation ;
- fournir dans ledit semoir (S) des moyens électriques/électroniques de contrôle (103) de l'émission sélective dudit flux d'air comprimé, à travers ladite buse pneumatique (101) de perforation, en synchronisme avec l'éjection de chaque semence à travers ledit orifice d'éjection de semence desdits moyens d'éjection pneumatique (20.53) ;
- produire et diriger un flux d'air comprimé à travers lesdits moyens pneumatiques (100) de perforation pour la perforation de ladite toile (P) jusqu'à ladite buse pneumatique (101) de perforation ;
- contrôler l'émission sélective dudit flux d'air comprimé, à travers ladite buse pneumatique (101) de perforation, en synchronisme avec l'éjection de chaque semence à travers ledit orifice d'éjection des semences desdits moyens d'éjection pneumatique (20.52) au moyen desdits moyens électriques/électroniques de contrôle (103), de manière à :
- former dans ladite portion de ladite toile de paillage (P) une ouverture (A1, A2), au moyen d'un flux d'air comprimé émis par ladite buse pneumatique (101) de perforation de ladite toile (P), avant qu'une semence respective ne soit éjectée par ledit orifice d'éjection des semences desdits moyens d'éjection pneumatique (20.53) ;
- intercepter ledit flux d'air comprimé à travers ladite buse pneumatique (101) de perforation au moins après l'éjection de chaque semence à travers ledit orifice d'éjection des semences desdits moyens d'éjection pneumatique (20.53) ;
- répéter séquentiellement les opérations de formation d'une ouverture respective (A1, A2) dans ladite portion de ladite toile de paillage (P), au moyen d'un flux d'air comprimé émis à travers ladite buse pneumatique (101) de perforation, et d'interception dudit flux d'air comprimé à travers ladite buse pneumatique (101) de perforation, pour chaque semence éjectée à travers ledit orifice d'éjection des semences desdits moyens d'éjection pneumatique (20.53),
de manière à former dans ladite portion de ladite toile de paillage (P), qui est déposée sur le sol lors de l'avancement dudit tracteur, une succession d'ouvertures (A1, A2) correspondant audit au moins un sillon, réalisées par perforation de ladite toile (P) au moyen desdits moyens pneumatiques (101) de perforation et à travers lesquelles passent respectivement et séquentiellement les semences qui sont éjectées par ledit orifice d'éjection desdits moyens d'éjection pneumatique (20.53) et qui sont déposées dans ledit au moins un sillon.

2. Procédé selon la revendication 1, **caractérisé par le fait qu'**il comprend pour lesdits moyens électriques/électroniques de contrôle (103) les étapes consistant à :
- fournir des premiers moyens électriques/électroniques (104) capteurs de présence, configurés pour détecter chaque semence en transit le long d'une première section desdits moyens convoyeurs de semences (20.4, 20.52), respectivement desdits moyens d'éjection pneumatique de semences (20.53), à un premier instant de temps (t1) dudit transit, et émettre un premier signal électrique de sortie correspondant ;
- fournir des seconds moyens électriques/électroniques (105) capteurs de présence, configurés pour détecter chaque semence en transit le long d'une seconde section desdits moyens convoyeurs de semences (20.4, 20.52), respectivement desdits moyens d'éjection pneumatique de semences (20.53), à un second instant (t2) dudit transit, postérieur audit premier instant (t1), et émettre un second signal de sortie électrique correspondant ;
- fournir des moyens à électrovanne (106) configurés pour intercepter sélectivement l'émission dudit flux d'air comprimé à travers ladite buse pneumatique de perforation (101) ;
- fournir des moyens électroniques de traitement et de calcul (107), qui sont connectés dans un circuit électrique par rapport auxdits premiers moyens électriques/électroniques (104) capteurs de présence, auxdits seconds moyens électriques/électroniques (105) capteurs de présence et auxdits moyens à électrovanne (106), et qui sont configurés et programmés pour déterminer sélectivement l'ouverture pneumatique desdits moyens à électrovanne (106), lorsque lesdits premiers moyens capteurs (104) émettent ledit premier signal électrique de sortie, et la fermeture pneumatique desdits moyens à électrovanne (106), lorsque lesdits seconds moyens capteurs (105) émettent ledit second signal électrique de sortie.

3. Procédé selon la revendication 2, dans lequel lesdits premiers moyens capteurs de présence (104) et lesdits seconds moyens capteurs de présence (105) sont configurés comme des moyens capteurs de proximité.

4. Procédé selon l'une ou plusieurs des revendications précédentes, **caractérisé par le fait que**, pendant l'avancement du tracteur et le déroulement de ladite toile de paillage (P), les opérations suivantes sont répétées séquentiellement :
- émission d'un flux d'air comprimé à travers ladite buse pneumatique de perforation (101), et formation conséquente d'une ouverture oblongue respective (A2) dans une première partie, correspondant à ladite buse pneumatique (101), de ladite portion de toile de paillage (P), à travers laquelle est éjectée - par le biais de l'orifice d'éjection desdits moyens d'éjection pneumatique (20. 53) - une semence respective, qui est déposée dans le sillon sous ladite portion de toile (P), et interception ultérieure dudit flux d'air comprimé à travers ladite buse pneumatique d'éjection (101), et maintien conséquent de l'intégrité d'une seconde partie de ladite portion de toile de paillage (P), qui suit dans la direction de marche du tracteur et adjacente à ladite ouverture oblongue (A2), ces opérations étant répétées pour chaque semence éjectée par ladite buse d'éjection de semences desdits moyens d'éjection pneumatique (20.53), de manière à former dans ladite portion de ladite toile de paillage (P), qui est déposée sur le sol pendant que ledit tracteur avance, une succession linéaire d'ouvertures oblongues (A2) correspondant audit au moins un sillon ;
- semis séquentiel de semences qui sont éjectées par ledit orifice d'éjection desdits moyens d'éjection pneumatique (20.53) et qui passent chacune à travers une ouverture oblongue respective (A2) qui vient d'être formée et sont déposées dans ledit au moins un sillon, de sorte que chaque semence corresponde à une ouverture (A2) ayant une taille et une forme configurées pour la sortie, par rapport à ladite portion de toile (P), de la plantule qui germera à partir de ladite semence.

5. Procédé selon les revendications 2 ou 3 ou la revendication 4 en combinaison avec l'une des revendications 2 ou 3, **caractérisé par le fait que** la durée de l'intervalle de temps entre ledit premier instant de temps (t1) et ledit second instant de temps (t2) est déterminée en fonction de la distance entre lesdits premiers moyens électriques/électroniques capteurs (104) et lesdits seconds moyens électriques/électroniques capteurs (105) et de la pression de l'air sous pression généré et/ou distribué par lesdits seconds moyens générateurs (102) et résidant dans lesdits moyens pneumatiques (100) de perforation et est proportionnelle à la distance entre l'axe de l'ouverture de sortie d'air comprimé de ladite buse pneumatique (101) de perforation et l'axe de l'orifice d'éjection desdits moyens d'éjection pneumatique (20.53) de semences, de sorte que la semence qui est éjectée dudit orifice d'éjection passe à travers ladite ouverture (A2) de ladite toile (P) dans une position intermédiaire entre les extrémités longitudinales de ladite ouverture (A2).

6. Semoir (S) attelé à un tracteur, comprenant :
- au moins une trémie (20.1) pour contenir une masse de semences et des moyens (20.2) de distribution et de singularisation des semences contenues dans ladite au moins une trémie pour les semer dans au moins un sillon dans une portion de terrain à ensemencer sous ledit semoir (S) ;
- des moyens de création de sillon (70) qui, au fur et à mesure que le tracteur avance sur ladite portion de terrain à ensemencer, forment ledit au moins un sillon, dans lequel sont déposées les semences distribuées et singularisées par lesdits moyens (20.2) de distribution et de singularisation des semences ;
- des moyens convoyeurs de semences (20.4, 20.52), dans lesquels sont acheminées les semences distribuées et singularisées par lesdits moyens (20.2) de distribution et de singularisation des semences ;
- des premiers moyens pneumatiques (20.5, 20.51) générant de l'air sous pression, qui produisent et/ou dirigent un flux d'air comprimé le long desdits convoyeurs de semences (20.4, 20.52), lequel flux d'air comprimé transporte chaque semence individuellement, provenant desdits moyens (20.2) de distribution et de singularisation des semences, à travers lesdits moyens convoyeurs de semences (20.4, 20.52) ;
- des moyens d'éjection pneumatique (20.53) des semences à déposer, lesquels sont raccordés de manière pneumatique et étanche et en aval desdits moyens convoyeurs de semences (20.4, 20.52), selon la direction dudit flux d'air comprimé, et présentent une partie terminale configurée comme un orifice d'éjection des semences, disposée au-dessus dudit au moins un sillon ;
- où chaque semence, répartie et singularisée à partir de ladite masse de semences, est projetée et éjectée au moyen dudit flux d'air comprimé à travers ledit orifice d'éjection desdits moyens d'éjection pneumatique (20.53), en direction dudit au moins un sillon ;
ledit semoir (S) étant **caractérisé par le fait qu'**il comprend :
- des moyens de support, de déroulement et de dépôt d'une toile de paillage (P) enroulée sur au moins une bobine (80.7), dans lesquels, lors de l'avancement dudit tracteur (S), depuis ladite au moins une bobine (80.7) est déroulée une portion de ladite toile de paillage (P), qui est retenue au sol au moyen d'au moins une zone d'extrémité libre, disposée en amont d'une extrémité initiale dudit au moins un sillon, en fonction du sens de marche du tracteur ;
- où ladite portion de ladite toile de paillage (P), qui est déroulée à partir de ladite au moins une bobine (80.7), est disposée au-dessous et à proximité dudit orifice d'éjection des semences desdits moyens d'éjection pneumatique (20.53) et au-dessus dudit au moins un sillon, sur lequel ladite toile de paillage (P) est superposée, et
- où les semences sont éjectées séquentiellement à travers ledit orifice d'éjection desdits moyens d'éjection pneumatique (20.53) et sont déposées séquentiellement dans ledit au moins un sillon,
- des moyens pneumatiques (100) de perforation de ladite portion de la toile de paillage (P), comprenant un tuyau pneumatiquement étanche et une buse pneumatique (101), configurée pour la perforation de la toile de paillage (P) et qui est raccordée de manière étanche à une extrémité desdits moyens pneumatiques (100) de perforation, et qui est disposée au-dessus de ladite portion de ladite toile de paillage (P), en amont, dans le sens de marche dudit tracteur, et à proximité dudit orifice d'éjection des semences desdits moyens d'éjection pneumatique (20. 53), et au niveau dudit au moins un sillon situé sous ladite toile ;
- des seconds moyens pneumatiques (102) sous forme de générateurs ou de distributeurs d'air sous pression, disposés en amont et raccordés de manière étanche par rapport à une autre extrémité desdits moyens pneumatiques (100) de perforation et qui produisent/dirigent un flux d'air comprimé à travers lesdits moyens pneumatiques (100) de perforation pour la perforation de ladite toile (P) ;
- des moyens électriques/électroniques (103) de contrôle de l'émission sélective dudit flux d'air comprimé, à travers ladite buse pneumatique (101) de perforation, en synchronisme avec l'éjection de chaque semence à travers ledit orifice d'éjection de semences desdits moyens d'éjection pneumatique (20.53).

7. Semoir selon la revendication 6, **caractérisé par le fait que** lesdits moyens électriques/électroniques (103) de contrôle comprennent :
- des premiers moyens électriques/électroniques (104) capteurs de présence, configurés pour détecter chaque semence en transit le long d'une première section desdits moyens convoyeurs de semences (20.4, 20.52), respectivement desdits moyens d'éjection pneumatique (20.53) de semences, à un premier instant de temps (t1) dudit transit, et pour émettre un premier signal électrique de sortie correspondant ;
- des seconds moyens électriques/électroniques (105) capteurs de présence, configurés pour détecter chaque semence en transit le long d'une seconde section des moyens convoyeurs de semences (20.4, 20.52), respectivement desdits moyens d'éjection pneumatique (20.53) de semences, à un second instant de temps (t2) dudit transit, postérieur audit premier instant de temps (t1), et pour émettre un second signal électrique de sortie correspondant ;
- des moyens à électrovanne (106), disposés en amont de ladite buse pneumatique (101) de perforation et configurés pour intercepter sélectivement l'émission dudit flux d'air comprimé à travers ladite buse pneumatique (101) de perforation ;
- des moyens électroniques de traitement et de calcul (107), qui sont connectés dans un circuit électrique par rapport auxdits premiers moyens électriques/électroniques capteurs (104), auxdits seconds moyens électriques/électroniques capteurs (105) et auxdits moyens à électrovanne (106) et qui sont configurés et programmés pour déterminer de manière sélective l'ouverture pneumatique desdits moyens à électrovanne (106), lorsque lesdits premiers moyens capteurs (104) émettent ledit premier signal électrique de sortie, et la fermeture pneumatique desdits moyens à électrovanne (106), lorsque lesdits seconds moyens capteurs (105) émettent ledit second signal électrique de sortie.

8. Semoir (S) selon la revendication 7, **caractérisé par le fait que** lesdits premiers moyens électriques/électroniques capteurs (104) et lesdits seconds moyens électriques/électroniques capteurs (105) sont disposés au niveau desdits moyens d'éjection pneumatique (20.53) des semences en amont dudit orifice d'éjection desdits moyens d'éjection pneumatique (20.53) des semences.

9. Semoir (S) selon la revendication 7 et/ou 8, **caractérisé par le fait que** lesdits premiers moyens électriques/électroniques capteurs (104) et lesdits seconds moyens électriques/électroniques capteurs (105) sont configurés comme des moyens capteurs de proximité.

10. Semoir (S) selon l'une ou plusieurs des revendications précédentes, **caractérisé par le fait que** ladite buse de perforation (101) présente un trou de sortie d'air sous pression d'un diamètre prédéterminé, dont l'axe est essentiellement orthogonal par rapport à la partie sous-jacente de ladite portion de toile de paillage (P), et qui est configuré pour réaliser une perforation pneumatique de la toile (P) à la manière d'une lame tranchante d'épaisseur correspondant substantiellement au diamètre du trou.

11. Semoir (S) selon l'une ou plusieurs des revendications précédentes, **caractérisé par le fait que** ladite buse pneumatique de perforation (101) est raccordée de manière pneumatique par rapport auxdits moyens de perforation (100) de manière démontable et interchangeable avec des buses pneumatiques de perforation présentant des trous d'émission d'air de diamètres différents.
